# EUROPÄISCHE PATENTANMELDUNG

(11) **EP 4 198 175 A2**
(43) Veröffentlichungstag der Anmeldung: **21.06.2023**
(21) Anmeldenummer: 22213347.2
(22) Anmeldetag: 14.12.2022
(51) Int. Cl.: C25B 13/07, H01M 8/124, C25B 3/26

(54) **TRÄGERGESTÜTZTER ELEKTROLYT, VERFAHREN ZU SEINER HERSTELLUNG UND SEINE VERWENDUNG**

(30) Priorität: 16.12.2021 DE 102021133521
(71) Anmelder: Forschungszentrum Jülich GmbH, 52425 Jülich (DE)
(72) Erfinder: Robinson, Dr. Shay Alexander, 52428 Jülich (DE); Eichel, Prof. Dr. Rüdiger-A., 52428 Jülich (DE); Kungl, Dr. Hans, 69118 Heidelberg (DE); Tempel, Dr. Hermann, 52372 Kreuzau (DE)
(74) Vertreter: Schwenderling, Jens

(57) **Zusammenfassung**

Die Anmeldung betrifft einen trägergestützter Elektrolyt, umfassend einen Träger mit einer ersten Oberfläche und einen Elektrolyt, der auf der ersten Oberfläche aufgebracht ist, wobei der Träger einen ionenleitenden Festkörper mit einer Porosität von 30 % bis 80 % aufweist. Ferner wird die Herstellung des trägergestützten Elektrolyten sowie seine Verwendung beschrieben.

## Beschreibung

Die Erfindung betrifft einen trägergestützten Elektrolyten, ein Verfahren zu seiner Herstellung und seine Verwendung.

Der derzeitige Stand der Technik im Bereich der keramischen Brennstoff- und Elektrolysezellen ist die Ni-Cermet (ceramic-metal)- Elektrode-Trägerelektrolyt Festoxidzelle. In einer solchen Festkörperzelle wird NiO mit vorgeformten keramischen Werkstoffen (Festkörperreaktions-SSR, z.B. YSZ oder BZY) oder mit stöchiometrischen Mengen von Vorläuferoxiden (Präkursoroxiden) für keramische Werkstoffe (Festkörperreaktivsintern-SSRS, z. B. Yttriumoxid, Zirkoniumoxid, Bariumoxid usw.) vermischt. Auf diese Weise entsteht ein zweiphasiges Verbundnetzwerk, das bei Einwirkung von Wasserstoff zu einer elektrisch leitenden Ni-Metall und einer ionen- (oxid- oder protonen-)leitenden Keramikphase reduziert wird. Dieses zusammengesetzte Ni-Cermet-Mikrogefüge dient dann auch als Träger für den ionenleitenden Elektrolyten.

Die Ni-Cermet-Zusammensetzung ist anfällig für eine Deaktivierung, die durch folgende Mechanismen verursacht wird: 1. Kohlenstoffablagerung durch den Betrieb in kohlenstoffhaltiger Atmosphäre mit niedriger Wasserdampfkonzentration, 2. Oxidation durch den Betrieb mit hoher Stromdichte oder durch hohe Wasserdampfkonzentration, die zum Bruch und mechanischem Versagen der Keramikstruktur führt, 3. Ni-Migration durch eine Erhöhung der Mobilität oxidierter Oberflächen-Ni-Teilchen, was zu einem Ni-Transport weg vom Elektrolyten und einem elektrisch nicht-perkolierten (durchlässig, "percolated") Netzwerk führt. 4. Darüber hinaus neigen Ni-Nanopartikel dazu, die Korngrenzen von gesinterten keramischen Körpern zu besiedeln, was sowohl das Risiko eines Materialversagens aufgrund von Oxidation erhöht als auch die Zellleistung aufgrund eines höheren Korngrenzwiderstands verringert.

Darüber hinaus tolerieren die spezifischen interessierenden Elektrodenmaterialien nicht die hohe Temperatur, die für die Herstellung eines dichten und gasdichten Elektrolyten notwendig sind.

Demzufolge liegt der vorliegenden Erfindung die Aufgabe zugrunde, einen trägergestützten Elektrolyten sowie ein Verfahren zu seiner Herstellung und seiner Verwendung zu schaffen, die nicht die aus dem Stand der Technik bekannten Nachteile aufweisen.

Erfindungsgemäß wird dies durch einen trägergestützten Elektrolyten ("backbone supported electrolyte", nachfolgend auch als "BSE" bezeichnet) erreicht, der einen Träger mit einer ersten Oberfläche und einen Elektrolyten umfasst, der auf der ersten Oberfläche aufgebracht ist. Der Träger weist dabei einen ionenleitenden Festkörper mit einer Porosität von 30 % bis 80 % auf, insbesondere mit einer Porosität von 50 % bis 65 %. Die Porosität stellt das Verhältnis von Hohlraumvolumen zu Gesamtvolumen dar. Sie kann aus Aufnahmen mittels Rasterelektronenmikroskop (REM) ermittelt werden.

In einer Ausführungsform können der Träger und der Elektrolyt chemisch dasselbe Material umfassen. In einer weiteren Ausführungsform kann der Träger ein durchlässiges (perkoliert, im Englischen als "percolated") Netzwerk einer ionenleitenden keramischen Phase aufweisen.

In einer Ausführungsform kann das Material für den Träger und/oder den Elektrolyten ausgewählt sein unter Akzeptor-dotierten Oxiden der ABO₃-Perowskite protonenleitender Keramiken und Akzeptor-dotierten Oxiden der MO₂-Fluorite ionenleitender Oxidkeramiken, z. B. kann das Akzeptor-dotierte Oxid der ABO₃-Perowskite protonenleitender Keramiken Yttrium-dotiertes Bariumzirkonat, und/oder Yttrium-dotiertes Bariumcerat sein. Das Akzeptor-dotierte Oxid der MO₂-Fluorite der ionenleitenden Oxidkeramiken kann beispielsweise Yttrium-dotiertes Zirkonia oder Gadolinium-dotiertes Ceroxid sein. Insbesondere kann das Akzeptor-dotierte Oxid der ABO₃-Perowskite protonenleitender Keramiken eine Verbindung der Formel BaZr_{1-x-y-z}CeₓY_{y}Yb_{z}O_{3-δ} sein, wobei 0<x<0,9, 0<y<0,2, 0<z<0,2, jedoch muss die Summe der Indizes auf dem B-Platz (ABO3) immer 1 sein, und Y oder Yb müssen immer im System vorhanden sein (im Allgemeinen mindestens 0,1), wobei Zr=0,9 (x=0) oder Ce=0,9 als Buchstützen für eine akzeptable Stöchiometrie dienen, z. B. BaZr_{0,9}Y_{0,1}O_{3-δ} oder BaCe_{0,9}Yb_{0,1}O_{3-δ} ist. Durch den Parameter δ wird darauf hingewiesen, dass es sich um sauerstoffdefizitäre Perowskite handelt. Solche sind an sich bekannt, so dass der Fachmann weiß, wie δ zu verstehen ist. Insbesondere sind damit erfindungsgemäß alle theoretisch möglichen sauerstoffdefizienten Perowskite erfasst. Dieser Wert kann je nach Feuchtigkeit, Temperatur, Gaszusammensetzung oder Sintertemperatur der Ausgangskeramik variieren. Es handelt sich nicht um einen fest definierbaren Wert. Beispielsweise kann δ zwischen 0.0 und 0.25 liegen ohne dass die Perowskitstruktur verloren geht.

Die vorliegende Erfindung baut auf dem Stand der Technik auf und verbessert die Architektur von Ni-Keramik-Metall-Elektroden (Cermets) mit Elektrolytträger. Ein solcher Elektrolytträger besteht nominell aus einem zweiphasigen Netzwerk aus einer ionenleitenden Keramik und einem damit verbundenen elektronenleitenden Metall. In der Regel handelt es sich bei den Ionen um Oxidionen oder Protonen.

Beispielsweise kann sie wie folgt aufgebaut sein: Ni-BZCY-Cermet-Trägerelektrode mit BZCY-Elektrolytmembran und LSCF (z.B. La_{0.8}Sr_{0.2}Co_{0.7}Fe_{0.3}O_{3-δ}) perowskite-Elektrode. Die LSCF-Elektrode ist bei der Sintertemperatur von 1500 °C von Ni-BZCY nicht stabil. Ferner liegt Ni-Metall vor, das als dunkle Körner in REM-Aufnahmen erkennbar ist.

Im Gegensatz zur Ni-Cermet-Elektrode verzichtet die vorliegende Erfindung auf die Ni-Komponente und beseitigt damit die bereits genannten Nachteile, die mit NiO bei der Herstellung und Sinterung sowie bei der Verwendung von Ni-Metall in Anwendungen mit hohen Stromdichten aufgrund von Elektrooxidation und bei Anwendungen in kohlenstoffhaltiger Atmosphäre verbunden sind. Verwendung von Ni-Metall in Anwendungen mit hohem Stromfluss und in kohlenstoffhaltigen Atmosphären. Darüber hinaus ermöglicht die Erfindung die Anwendung von Elektrodenzusammensetzungen, die bei den Sintertemperaturen, die erforderlich sind, um völlig dichte, gasdichte Elektrolytmembranen (> 95 % theoretische Dichte) zu erhalten, bei denen Ni-Cermets weder chemisch noch mechanisch stabil sind.

Mit der erfindungsgemäßen Festkörperelektrolyt-Trägermikrostruktur, insbesondere in vorstehend beschriebenen Ausführungsformen, wird eine Verbesserung des Stands der Technik für ionen- (oxid-, protonen-) leitende keramische Zellen mit Ni-Cermet-Elektroden (CERamic-METal) (z. B. Nickel-Metall, Yttrium-stabilisierte Zirkonia-Keramik, YSZ, und Yttrium-dotierte Bariumzirkonat-Keramik, BZY) erreicht.

Insbesondere ist die Verwendung von Elektrodenzusammensetzungen und - werkstoffen möglich, die bei den typischen Sintertemperaturen (≥ 1350 °C) der keramischen Werkstoffe nicht stabil sind. Darüber hinaus erweitert der erfindungsgemäße trägergestützte Elektrolyt die Wissensbasis und die Anwendungsflexibilität von ionenleitenden Festkörperkeramiken. Die Anwendung des erfindungsgemäßen trägergestützen Elektrolyten schafft die Grundlage für keramische Hochleistungszellen, die in Kombination mit kohlenstofftoleranten elektrokatalytisch aktiven porösen Metallelektroden, elektronisch leitenden Elektroden auf Oxidbasis und dreifach leitenden ionisch-elektronischen Elektroden verwendet werden können.

Ein Aspekt des BSE ist das poröse, ionenleitende Festkörperelektrolytgerüst (Träger). Es kann das gleiche Festoxid wie die hermetische, gasdichte Elektrolytmembran aufweisen und ist z.B. ein durchlässiges Netzwerk der ionenleitenden Keramikphase. Die Porosität beträgt nominell 30-80 %, insbesondere 50-65 %. Es können verschiedene Zusammensetzung der ionenleitenden Phase eingesetzt werden, typischerweise handelt es sich jedoch um die Familie der protonenleitenden Keramiken auf der Basis des Akzeptor-dotierten Oxids ABO₃-Perowskit, z. B. Yttrium-dotiertes Bariumzirkonat, Yttrium-dotiertes Bariumcerat usw., oder um die Familie der ionenleitenden Oxidkeramiken auf der Basis des Akzeptor-dotierten Oxids MO₂-Fluorit, z. B. Yttrium-dotiertes Zirkoniumoxid, Gadolinium-dotiertes Ceroxid usw. Dies schließt andere mögliche Kristallstrukturen, z. B. geschichtete A₂BB'O₆-Doppelperowskite, oder andere Zusammensetzungen nicht aus.

Gegenstand der vorliegenden Erfindung ist ferner ein Verfahren zur Herstellung des trägergestützten Elektrolyten, insbesondere wie er vorstehend beschrieben wurde, umfassend die folgenden Schritte:
Herstellen einer auf Wasser basierenden Aufschlämmung für einen Grünling für den Träger,
Zugabe eines Porenbildners,
Schrühen (Rohbrennen, "bisque firing) der Aufschlämmung, wodurch ein Träger entsteht, und
Aufbringen eines wässrigen Mediums mit dem Material für den Elektrolyten in festem Zustand oder in Form des Vorläuferoxidpulvers.

Ferner ist Gegenstand der vorliegenden Erfindung ein Verfahren zur Herstellung eines trägergestützten Elektrolyten, insbesondere wie er vorstehend beschrieben ist, umfassend die folgenden Schritte:
Herstellen einer auf Wasser basierenden Aufschlämmung für einen Grünling für den Träger,
Zugabe eines Porenbildners,
Formen der Aufschlämmung in einer Form, um den Träger mit einer ersten Oberfläche herzustellen,
Aufbringen eines wässrigen Mediums mit dem Material für den Elektrolyten in festem Zustand oder in Form des Vorläuferoxidpulvers und einem Binder auf der ersten Oberfläche, und
Zusammensintern des Trägers mit dem Elektrolyten.

Unter Präkursoren werden Vorläuferverbindungen der Bestandteile des Trägers und des Elektrolyten verstanden, die in die darin vorliegenden Endprodukte umgewandelt werden. Beispiele für Präkursoren sind die Carbonate, Sulfate oder Oxide der eingesetzten Metalle.

In einer Ausführungsform kann der Porenbildner ausgewählt sein unter Holzlignin, Sägemehl, Sägespäne, Polymethylmethacrylat, Polyvinylpyrrolidon, Polyvinylbutyral und Aktivkohle. Ferner kann in einer Ausführungsform ein Sinterhilfsmittel für das Sintern eingesetzt werden, z. B. ZnO und/oder CuO. In einer weiteren Ausführungsform kann das Sintern bei einer Temperatur von 1200 °C oder höher, insbesondere bei 1500 °C oder höher, insbesondere bei 1200 bis 1700 °C durchgeführt werden. In einer anderen Ausführungsform kann die Korngröße im Träger und/oder Elektrolyten (des erhaltenen trägergestützten Elektrolyten) 2 µm bis 5 µm betragen. Die Korngröße kann durch Vergleich der Korngröße mit der angegebenen Größenskala bei hoher Auflösung rasterelektronenmikroskopischen Aufnahmen ermittelt werden.

In einer Ausführungsform kann eine Elektrodenträgertinte auf die von der ersten Oberfläche des Elektrodenträgers abgewandte Oberfläche des Elektrolyten aufgebracht werden. Außerdem kann in einer Ausführungsform nach der Abscheidung der Elektrodenträgertinte eine weitere Sinterung durchgeführt werden, beispielsweise unter den Sinterbedingungen des ersten Sinterschritts. Nach dem zweiten Schritt kann der Elektrodenträger dasselbe Material wie der Elektrolytträger und der Elektrolyt umfassen. In einer Ausführungsform kann er als Kathode dienen, so dass der Elektrolytträger anschließend als Anode verwendet werden kann.

Die Porosität des ionenleitenden Festkörperelektrolytgerüsts wird durch die Verwendung eines Porenbildners erzeugt, der während des Sinterns ausbrennt. Ein Unterscheidungsmerkmal dieses BSE-Herstellungsverfahrens ist die Verwendung von Holzlignin oder Sägemehl aus Holzverarbeitungsrückständen als primärer porenbildender Bestandteil in der Grünkörperaufschlämmung mit fester Lösung. Das Sägemehl wird zunächst aufbereitet und in beispielsweise zwei Größenverteilungen gesiebt werden. Es liegen dann beispielsweise zwei Größenverteilungen vor, um zwei verschiedene porenbildende Aufschlämmungen herzustellen. Je größer die Größe des Porenbildners ist, desto größer sind die Poren. Außerdem können zusätzliche Porenbildner wie Polymethylmethacrylat (PMMA), Polyvinylpyrrolidon (PVP), Polyvinylbutyral (PVB) und Aktivkohle verwendet werden, um unterschiedliche Ausbrenncharakteristika (Geschwindigkeit und Flüchtigkeit) zu erzielen. Ein weiterer Aspekt ist die auf Wasser basierende Zusammensetzung der Grünkörperaufschlämmung, die auf verschiedene Herstellungsmethoden zugeschnitten werden kann, beispielsweise hinsichtlich Feuchtigkeit und Viskosität, z. B. dicke Paste für die Extrusion, Aufschlämmung für die Formgebung, flüssiger Schlicker für das Gießen.

Der poröse Träger kann zunächst hergestellt und geschrüht (gebrannt "bisque fired") werden (dies ist ein Begriff, der einen Verarbeitungsschritt bei hoher Temperatur beschreibt, der nicht ausreicht, um die Struktur vollständig zu sintern, aber ausreichend ist, um den Porenbildner auszubrennen und mechanische Stabilität zu gewährleisten) und dann mit dem Elektrolyten beschichtet werden, wobei die Präkursoren entweder in festem Zustand (als kalzinierte Vorläuferoxide in der endgültigen Kristallstruktur) oder in einer Vorläuferoxidlösung vorliegen. Alternativ kann die Elektrolytschicht vor dem Sintern aufgebracht und die BSE-Verbundarchitektur anschließend mit dem porösen Träger zusammengesintert werden. Zu diesem Zweck kann eine Paste hergestellt werden, die sich aus dem bereits erwähnten Trägermittel und z.B. einer größeren Menge (z.B. 3,5 g/5 ml) einer Festkörper- oder Vorläuferoxidzusammensetzung sowie einem PVP-Bindemittel (0,5 g/5 ml) zusammensetzt und auf die Oberseite des porösen Trägers aufgetragen wird. Die Oberseite kann dann zusätzlich mit weiteren Elektrolytschichten besprüht werden, um eine Mindestschichtdicke von 10 µm zu erreichen. Das BSE wird dann im Hochtemperaturzyklus gebrannt, wie im Brennprofil-Diagramm (vgl. unten) dargestellt ist. Ein Aspekt ist also, dass das hydrophile Holzlignin oder Sägemehl und die Aktivkohle, falls vorhanden, oder die vorhandene Porosität, die durch das Ausbrennen des Porenbildners während des Biskuitbrandes entstanden ist, mit einer Paste versiegelt wird, die auch die gesamte Dicke der Elektrolytmembran ausmachen kann.

Um eine vollständig dichte Elektrolytmembran zu erhalten und die Korngröße sowohl der Membran als auch des porösen Trägers zu erhöhen, ist es günstig, ein Sinterhilfsmittel und eine Hochtemperaturverarbeitung (typischerweise ≥ 1500°C) zu verwenden, wie im Brennprofil-Diagramm (vgl. unten) dargestellt. Das am häufigsten verwendete Sinterhilfsmittel ist NiO, was einer der Gründe dafür ist, dass die Ni-Cermet-Zusammensetzung vielfach eingesetzt wird. Allerdings geht dies mit den bereits erwähnten nachteiligen Auswirkungen einher. In dem Bestreben, Ni und NiO aus dem System zu eliminieren, wurden ZnO und CuO eingesetzt.

Ein zweites Backbone-Elektrodenträgermedium, wie zuvor beschrieben, kann dann auf die dichte Elektrolytmembran aufgetragen und das Hochtemperatursinterprofil wiederholt werden. Dies führt zu einer dünnen Elektrodenträger-Mikrostruktur auf der Oberseite des BSE. Ein besonderer Aspekt dieser Architektur ist, dass sie die Anwendung einzigartiger Elektrodenzusammensetzungen ermöglicht, die ansonsten bei hohen Temperaturen, sogar schon bei 800 °C, nicht stabil sind, wie z. B. die Cu-CeO₂-Zusammensetzung, die derzeit im Mittelpunkt der Bemühungen um CO₂-Reduktion und Elektrokatalyse steht. Idealerweise werden die Poren mit den metallischen Elektrodenkomponenten gefüllt, um die Ni-Cermet-Elektrode nach dem Stand der Technik nachzubilden.

Der Elektrolyt kann 10-100 µm dick, der Träger 600-750 µm dick und die Elektrode 20-40 µm dick sein. Die Dicke kann mittels der Größenskala auf rasterelektronenmikroskopischen Aufnahmen ermittelt werden.

Gegenstand der vorliegenden Erfindung ist ferner die Verwendung des erfindungsgemäßen trägergestützten Elektrolyten in Kombination mit kohlenstofftoleranten elektrokatalytisch aktiven porösen Metallelektroden, elektronisch leitenden Elektroden auf Oxidbasis und dreifach leitenden ionisch-elektronischen Elektroden als Grundlage für hocheffiziente keramische Brennstoff- oder Elektrolysezellen.

Das nachfolgende Beispiel in Verbindung mit den Figuren veranschaulicht beispielhaft die vorliegende Erfindung. Es wird ausdrücklich darauf hingewiesen, dass das Beispiel nicht so verstanden werden soll, dass es die Erfindung darauf einschränkt.
Figur 1 zeigt ein Brennprofil des porösen Elektrolytträgers für die hier beschriebene Zusammensetzung.
Figur 2 zeigt REM-Bilder der erfindungsgemäßen Trägerstruktur.

### Beispiel

i. Als Beispiel wird die Herstellung des porösen Trägers und des Elektrolyten beschrieben. Zunächst wird die Herstellung der Metalloxidkomponenten beschrieben; dann folgt die Verwendung verschiedener Porenbildner entweder allein oder in Kombination, und anschließend werden die einzelnen Aufschlämmungstypen sowie die Gussformen beschrieben. Die Vorläuferoxide wurden in stöchiometrischen Mengen entsprechend der ABO₃-Perowskitstruktur abgewogen und in einem 300-ml-Teflon-Mahlgefäß gemischt. Für die substitutionell dotierte, sauerstoffdefiziente, protonenleitende Keramik mit der Zusammensetzung BaZr_{0.7}Ce_{0.1}Y_{0.1}Yb_{0.1}O_{3-δ} (BZCYYb7111), mit 1 Gew.-% Zinkoxid (ZnO) als Sinterhilfe, entspricht dies:
   - 78,94 g Bariumcarbonat, BaCO₃ (Alfa Aesar, 99,95 % Spurenmetallbasis)
   - 34,504 g Zirkoniumoxid, ZrO₂ (AlfaAesar, 99,7% Metallbasis ohne Hf (<75 ppm))
   - 6,884 g Ceroxid, CeO₂ (Sigma Aldrich, 99,9 % auf Basis von Spurenmetallen)
   - 4,516 g Yttriumoxid, Y₂O₃ (Sigma Aldrich, 99,99 % auf Basis von Spurenmetallen)
   - 7,882 g Ytterbiumoxid, Yb₂O₃ (Alfa Aesar, 99,998 % REaction)
   - 1,328 g Zinkoxid, ZnO (Sigma Aldrich, 99,99 % Spurenmetallbasis)
   Dieses Vorläuferoxidpulver ist spezifisch für die BZCYYb7111-Zusammensetzung. Nach dem Mischen wurden 50 ml Zirkonia-Mahlmedium mit einem Durchmesser von 2 mm sowie 200 ml Isopropylalkohol zum Eintauchen der Pulver zugegeben und dann 18 Stunden lang bei 250 U/min in einer Retsch-Planetenmühle gemahlen (wobei die Drehrichtung alle 15 Minuten umgekehrt wird). Nach dem Mahlen wurden die Pulver in ein 500-ml-Becherglas gesiebt, um das Mahlmedium zu entfernen, und 3 Stunden lang in einem Roto-Vapor-Vakuumtrockner bei 315 mBar und 30 U/min in einem 70°C warmen Wasserbad getrocknet, um das Isopropylalkohol zu entfernen.
ii. Sägemehl ist der primäre Porenbildner, der auch mit Polymethyl-Methacrylat (PMMA, M.W. ca. 15000, Acros Organics)-Pulver und PMMA-Perlen mit einem Durchmesser von ca. 600µm (Alfa Aesar) sowie Polyvinyl-Pyrrolidon-Pulver (PVP, M.W. 8000, Alfa Aesar) und Aktivkohle (Sigma Aldrich) ergänzt wurde. Die Sägespäne wurden vorbehandelt, um Teer- und Ölrückstände zu entfernen, und zunächst in einem Vakuumwärmeschrank bei 150 °C gebrannt. Anschließend werden sie in einem Mörser und Stößel zerkleinert und auf einem automatischen Schüttler mit Sieben von 1 mm und 250 µm Maschenweite gesiebt, um zwei Größenverteilungen zu erhalten. Nach der Behandlung hat das Sägemehl < 250 µm eine lockere Packungsdichte von ~ 0,21 g/cm³ und das Sägemehl 250 µm - 1 mm eine lockere Packungsdichte von ~ 0,16 g/cm³.
iii. Nach Beendigung der einzelnen Verarbeitungsverfahren für die Komponenten wird ein Schlicker hergestellt, der sich für alle Ausführungsformen nominell aus den folgenden Bestandteilen zusammensetzt, wobei die spezifischen Mengen für eine 30g-Charge als Beispiel angegeben werden:
   - 10% Sägespäne und andere porenbildende Zusätze... 3g

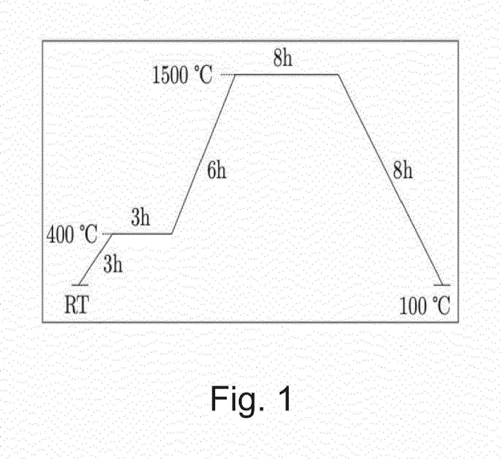

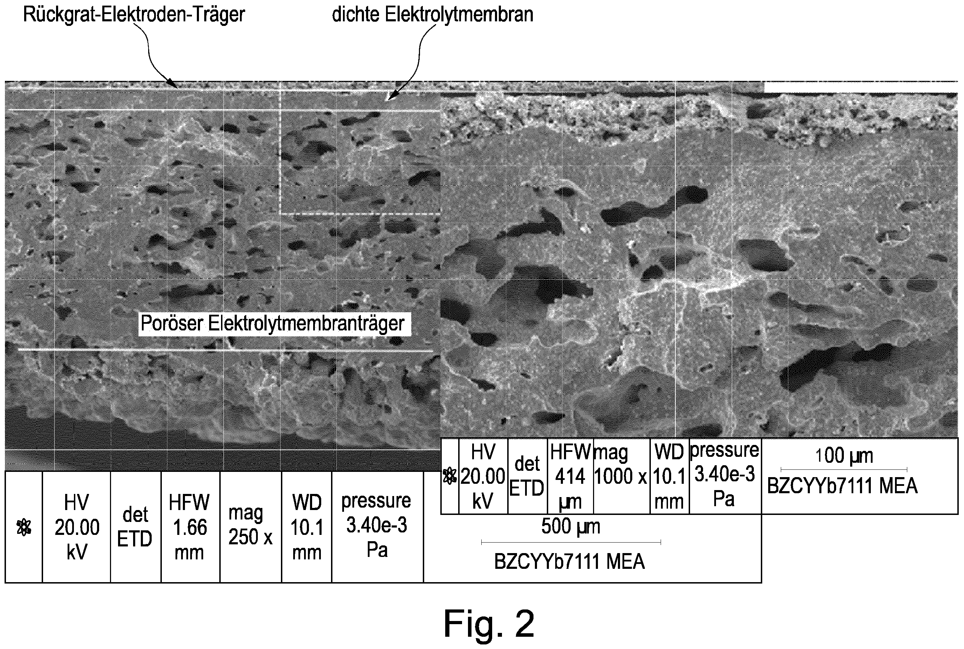

   - 8% BZCYYB7111-Vorläuferoxidpulver... 2,4g
   - 70% deionisiertes Wasser... 21g
   - 2% Mineralöl (Alfa Aesar)... 0,6g
   - 10% Polyvinylalkohol (PVA) Klebstoff (Titebond)... 3g
   Zunächst werden die flüssigen Komponenten in ein 300-ml-Becherglas mit Magnetrührer gegeben und bei 25 °C und 500 U/min auf eine Heizplatte gestellt. Da das Holzlignin wasseranziehend ist, lässt man das Gemisch über Nacht rühren, bis es leicht eindickt.
iv. Gießformen mit einem Durchmesser von 40 mm (Struers FixiForm) wurden vorbereitet, indem das Innere mit Mineralöl abgewischt wurde, dann wurden 5 g der Aufschlämmung aus dem Becherglas in jede Form gelöffelt. Jede Form wurde etwa sechsmal angeklopft, um den Schlamm gleichmäßig zu verteilen und die Sedimentation der Vorläuferoxidpulver am Boden und der Sägespäne am oberen Rand der Schlammablagerung in der Form zu fördern. Dann wurden die Formen auf eine Heizplatte bei 50 °C gestellt, mit einem Kimtech Kimwipe abgedeckt, um ein schnelles Trocknen zu verhindern, und 48 Stunden lang getrocknet. Nach dem Trocknen haben die porösen Träger einen Durchmesser von 36,5-37 mm und eine Dicke von 2,5-3 mm. Nach dem Trocknen wurde die Unterseite jedes gegossenen porösen Trägers mit Polierpapier der Körnung 2500 (Struers) poliert und die Oberfläche durch Einpinseln mit 0,5 g PVP in 5 ml Isopropylalkohol versiegelt.
v. Ein Tintenvehikel wurde aus den folgenden Komponenten hergestellt:
   - 1,5 g Solsperse 28000 (Lubrizol)
   - 1,25 g Dibutylpthalat (Sigma Aldrich)
   - 1,25 g Polyvinylbutyral (Sigma Aldrich)
   - 5 ml Isopropylalkohol
   - 15 ml Alpha-Terpineol (Sigma Aldrich)
   Zur Formulierung eines Sprühvehikel wurden 5 ml des oben genannten Tintenvehikels zu 15 ml Isopropylalkohol gegeben, bevor 1,5 g des in Abschnitt i. beschriebenen BZCYYB7111-Vorläuferpulvers hinzugefügt wurden (wobei das Pulver vor der Zugabe in einem Mörser und Stößel zerkleinert wurde). 6-10 aufeinanderfolgende Schichten des BZCYYb7111- Sprühvehikels wurden mit einer Airbrush bei 0,5 bar Überdruck gleichmäßig auf die versiegelte Oberfläche des porösen Trägers gesprüht und der Träger zwischen den einzelnen Schichten zum Trocknen auf die Heizplatte gelegt.
vi. Jeder der Porenbildner hat unterschiedliche Ausbrenncharakteristiken/Volatilitäten, so dass der Brennzyklus für jede der verschiedenen Zusammensetzungen maßgeschneidert werden muss, um sowohl eine poröse Träger-Mikrostruktur als auch eine dichte Elektrolytmembran zu erhalten. Dazu gehört die Anpassung der Haltezeit beim Ausbrennen des Bindemittels sowie der Anstiegsgeschwindigkeit von der Ausbrenntemperatur des Bindemittels zur Sintertemperatur. Die Haltezeit bei der Sintertemperatur ist ebenfalls bedeutsam, da sie sowohl die Porosität des porösen Trägers als auch die Schrumpfungsfehlanpassung der Elektrolytmembran und des porösen Trägers beeinflusst. Ein Brennprofil für die Elektrolytmembran mit porösem Träger ist in Fig. 1 dargestellt.
vii. Nach dem Sintern des porösen Trägers und der Membran wird die Trägerstruktur für die zweite Elektrode aufgebracht. Zu diesem Zweck wird ein Vorläuferpulver für das Grundgerüst synthetisiert, das aus dem BZCYYb711-Pulver und Aktivkohle als Porenbildner (oder andere wie in Abschnitt ii beschrieben, abhängig von der gewünschten Porengröße) besteht, wobei eine beispielhafte Zusammensetzung angegeben wird:
   - 5 ml des Farbträgers (Abschnitt v)
   - 1,25 g BZCYYb7111-Vorläuferpulver (Abschnitt i)
   - 0,75 g Aktivkohle
   Das BZCYYb7111-Vorläuferpulver und die Aktivkohle wurden erneut in einem Mörser mit Stößel zerkleinert, um Klumpen aufzubrechen, und dem Tintenträgermaterial zugegeben und auf einer Heizplatte mit einem Magnetrührer bei 25 °C und 300 U/min über Nacht gerührt. Anschließend wurden drei Schichten der BZCYYb7111-Trägerstruktur-Tinte mit einem Durchmesser von ca. 0,8 cm mittels Pinselstrich (oder Siebdruck, Sprühen usw.) auf die dichte Membranoberfläche aufgetragen und die einzelnen Schichten anschließend auf einer Heizplatte bei 40 °C ca. 30 Minuten lang getrocknet. Anschließend wurde die beschichtete poröse Membranträger erneut gemäß dem in Fig. 1 gezeigten Brennprofil gesintert.
viii. Nach Abschluss der Herstellung wurde die Probe mit einem Durchmesser von etwa 20 mm und einer Dicke von 0,75 mm in zwei Hälften gebrochen und im REM untersucht, um die Membrandicke zu messen und die Porengröße und Gesamtporosität zu bestimmen (siehe Fig. 2). Die Membran in diesem REM-Bild ist 50-100 µm dünn auf dem 600-750 µm dicken porösen Träger mit einem 25-40 µm dicken Rückgrat-Elektroden-Träger, und die Porosität liegt bei 25-35%. Die Korngröße der Elektrolytmembran und des porösen Trägers beträgt etwa 1-5 µm.

## Patentansprüche

1. Trägergestützter Elektrolyt, umfassend einen Träger mit einer ersten Oberfläche und einen Elektrolyt, der auf der ersten Oberfläche aufgebracht ist, wobei der Träger einen ionenleitenden Festkörper mit einer Porosität von 30 % bis 80 % aufweist.

2. Trägergestützter Elektrolyt nach Anspruch 1, wobei die Porosität 50 % bis 65 % beträgt.

3. Trägergestützter Elektrolyt nach einem der vorhergehenden Ansprüche, wobei der Träger und der Elektrolyt das chemisch selben Material umfassen.

4. Trägergestützter Elektrolyt nach einem der vorhergehenden Ansprüche, wobei der Träger ein durchlässiges Netzwerk einer ionenleitenden keramischen Phase aufweist.

5. Trägergestützter Elektrolyt nach einem der vorhergehenden Ansprüche, wobei das Material für den Träger und/oder den Elektrolyt ausgewählt ist unter Akzeptor-dotierten Oxiden der ABO₃-Perowskite protonenleitender Keramiken oder Akzeptor-dotierten Oxiden der MO₂-Fluorite ionenleitender Oxidkeramiken.

6. Trägergestützter Elektrolyt nach Anspruch 5, wobei das Akzeptor-dotierte Oxid der ABO₃-Perowskite protonenleitender Keramiken Yttrium-dotiertes Bariumzirkonat und/oder Yttrium-dotiertes Bariumcerat ist, oder das Akzeptor-dotierte Oxid der MO₂-Fluorite der ionenleitenden Oxidkeramiken Yttrium-dotiertes Zirkonia oder Gadolinium-dotiertes Ceroxid ist.

7. Trägergestützer Elektrolyt nach Anspruch 6, wobei das Akzeptor-dotierte Oxid der ABO₃-Perowskite protonenleitender Keramiken eine Verbindung der Formel BaZr_{1-x-y-z}CeₓY_{y}Yb_{z}O_{3-δ} ist, wobei 0<x<0,9, 0<y<0,2 und 0<z<0,2 ist.

8. Verfahren zur Herstellung eines trägergestützten Elektrolyten, insbesondere nach einem der Ansprüche 1 bis 7, umfassend die folgenden Schritte:
Herstellen einer auf Wasser basierenden Aufschlämmung für einen Grünling für den Träger,
Zugabe eines Porenbildners
Schrühen der Aufschlämmung, wodurch ein Träger erhalten wir, und
Aufbringen eines wässrigen Mediums mit dem Material für den Elektrolyten in festem Zustand oder in Form eines Vorläuferoxidpulvers.

9. Verfahren zur Herstellung eines trägergestützten Elektrolyten, insbesondere nach einem der Ansprüche 1 bis 7, umfassend die folgenden Schritte:
Herstellen einer auf Wasser basierenden Aufschlämmung für einen Grünling für den Träger,
Zugabe eines Porenbildners,
Formen der Aufschlämmung in einer Form, um einen Träger mit einer ersten Oberfläche herzustellen,
Aufbringen eines wässrigen Mediums mit dem Material für den Elektrolyten in festem Zustand oder in Form des Vorläuferoxidpulvers und einem Binder auf der ersten Oberfläche, und
Zusammensintern des Trägers mit dem Elektrolyten.

10. Verfahren nach einem der vorhergehenden Ansprüche, wobei der Porenbildner ausgewählt ist unter Holzlignin, Sägemehl, Sägespäne, Polymethylmethacrylat, Polyvinylpyrrolidone, Polyvinylbutyral und Aktivkohle.

11. Verfahren nach Anspruch 9 oder 10, wobei ein Sinterhilfsmittel für das Sintern eingesetzt wird.

12. Verfahren nach Anspruch 11, wobei das Sinterhilfsmittel ZnO und/oder CuO ist.

13. Verfahren nach einem der Ansprüche 9 bis 11, wobei das Sintern bei einer Temperatur von 1200 °C oder höher durchgeführt wird.

14. Verfahren nach einem der Ansprüche 8 bis 13, wobei die Korngröße im Träger und/oder Elektrolyten 2 µm bis 5 µm beträgt.

15. Verfahren nach einem der Ansprüche 8 bis 14, wobei auf der Oberfläche des Elektrolyten, der der ersten Oberfläche des Elektrolytträgers abgewandt ist, eine Elektrodenträgertinte aufgebracht wird.

16. Verfahren nach Anspruch 15, wobei nach dem Aufbringen der Elektrodenträgertinte ein weiteres Sintern durchgeführt wird.

17. Verwendung des trägergestützten Elektrolyten nach einem der Ansprüche 1 bis 7 in Kombination mit kohlenstofftoleranten elektrokatalytisch aktiven porösen Metallelektroden, elektronisch leitenden Elektroden auf Oxidbasis und dreifach leitenden ionisch-elektronischen Elektroden als Grundlage für hocheffiziente keramische Brennstoff- oder Elektrolysezellen.
